# EUROPÄISCHE PATENTSCHRIFT

(11) **EP 2 547 090 B1**
(45) Veröffentlichungstag und Bekanntmachung des Hinweises auf die Patenterteilung: **25.11.2020**
(21) Anmeldenummer: 12168347.8
(22) Anmeldetag: 16.05.2012
(51) Int. Cl.: H04N 5/232

(54) **Programmierbare Kamera, Programmiervorrichtung, Programmierbares Kamerasystem und Verfahren zur Programmierung**
Programmable camera, programming device, programmable camera system and programming method
Caméra programmable, dispositif de programmation, système de caméra programmable et procédé de programmation

(30) Priorität: 14.07.2011 DE 102011079141
(43) Veröffentlichungstag der Anmeldung: 16.01.2013
(73) Patentinhaber: Robert Bosch GmbH, 70442 Stuttgart (DE)
(72) Erfinder: Muehlmann, Karsten, 70499 Stuttgart (DE)

(56) Entgegenhaltungen:
- US-A1- 2004 257 457
- US-A1- 2008 022 070
- US-A1- 2011 101 086

## Beschreibung

Die vorliegende Erfindung betrifft eine programmierbare Kamera, eine Programmiervorrichtung, ein programmierbares Kamerasystem und ein Verfahren zur Programmierung.

### Stand der Technik

Kameras in Automobilen sind beispielsweise bekannt zur Fahrerassistenz etwa bei Spurerkennungssystemen oder Verkehrszeichenerkennung sowie zur Erkennung von Hindernissen.

Die DE 10 2006 027 121 A1 beschreibt ein Bildaufnahmesystem und Verfahren für die Entfernungsbestimmung mit einer fahrzeuggebundenen Kamera. Solche Kameras sind üblicherweise zum Austausch von Daten über einen CAN-Bus mit Einrichtungen im Fahrzeug verbunden. Die Kamera hat üblicherweise eine Kamera-Steuereinrichtung, die die Kamera steuert und eine Bildverarbeitung durchführt. Als Programm-Speicher weist die Kamera-Steuereinrichtung einen Flash-Speicher auf. Über den CAN-Bus kann die Kamera-Steuereinrichtung auch programmiert werden, jedoch hat der CAN-Bus eine niedrige Datenrate, so dass eine Programmierung bzw. ein Laden des Steuerprogramms lange dauern kann.

Zum Einlesen von Nutz-Daten in ein mobiles Gerät sind Barcodes eine häufig genutzte Möglichkeit. Die WO 2010/123332 A2 offenbart beispielsweise eine Datenkommunikation mit einem 2D-Barcode. Mit solchen Barcodes werden Daten über Gegenstände in ein mobiles Gerät zwecks Datenerfassung eingelesen.

Die Schrift US 2004/0257457 A1 offenbart ein System und ein Verfahren, welches eine Anzeige optischer Daten aufweist, wobei die optischen Daten wiederum zu übermittelnde Informationen repräsentieren. Das System umfasst ein Datenquellgerät und ein Datenzielgerät. Die optischen Daten werden von dem Datenzielgerät, beispielsweise einer Kamera, erfasst und von der Kamera zur Ermittlung der zu übermittelnden Informationen interpretiert.

Die Schrift US 2008/022070 A1 offenbart eine Kamera mit einer programmierbaren Steuervorrichtung, wobei die Steuervorrichtung dazu eingerichtet ist, eine Steuerung der Kamera einzustellen.

Die Aufgabe der vorliegenden Erfindung ist es die Programmierzeit einer Kamera mit einem Flash-Speicher in einem Fahrzeug mit Datenbus zu reduzieren.

### Offenbarung der Erfindung

Die vorliegende Erfindung schafft eine programmierbare Kamera nach Anspruch 1, eine Programmiervorrichtung nach Anspruch 2 und ein Verfahren zur Programmierung nach Anspruch 5.

Erfindungsgemäß werden Programmdaten zur Programmierung der Kamera-Steuereinrichtung nicht über einen Datenbus übertragen, sondern optisch mittels 2D-Barcodes. Die Autorisierung und die Protokollierung der Übertragung der Programmdaten erfolgen über den Datenbus.

Bevorzugte Weiterbildungen sind Gegenstand der Unteransprüche.

### Vorteile der Erfindung

Die Erfindung ermöglicht eine schnellere Übertragung größerer Datenmengen in ein Kamerasteuergerät über einen optischen Pfad.

Die Kamera ist vorzugsweise nur über einen Datenbus, insbesondere den CAN-Bus ansprechbar, und besitzt einen großen Flashbaustein, typisch 16-32 MBytes. Über den optischen Pfad kann die Programmierung der Kamera mit höherer Bandbreite erfolgen als über den CAN-Bus. Dadurch kann der Flashprogrammiervorgang, der über einen CAN-Bus üblicherweise eine Stunde oder sogar deutlich länger dauert, wesentlich verkürzt werden. Dies ist sowohl bei der Fertigung als auch bei einem Kundendienst von Automobilen vorteilhaft.

### Kurze Beschreibung der Zeichnungen

- Fig. 1: zeigt eine schematische Darstellung des programmierbaren Kamerasystems umfassed eine Kamera und eine Programmiervorrichtung gemäß einer Ausführungsform der vorliegenden Erfindung.
- Fig. 2: zeigt ein Flussdiagramm eines allgemeinen Programmierverfahrens gemäß einer weiteren Ausführungsform der vorliegenden Erfindung.
- Fig. 3: zeigt ein Flussdiagramm eines Programmierverfahrens gemäß einer weiteren Ausführungsform der vorliegenden Erfindung mit einem ersten Übertragungsschema.
- Fig. 4: zeigt ein Flussdiagramm eines Programmierverfahrens gemäß einer weiteren Ausführungsform der vorliegenden Erfindung mit einem zweiten Übertragungsschema.

### Ausführungsformen der Erfindung

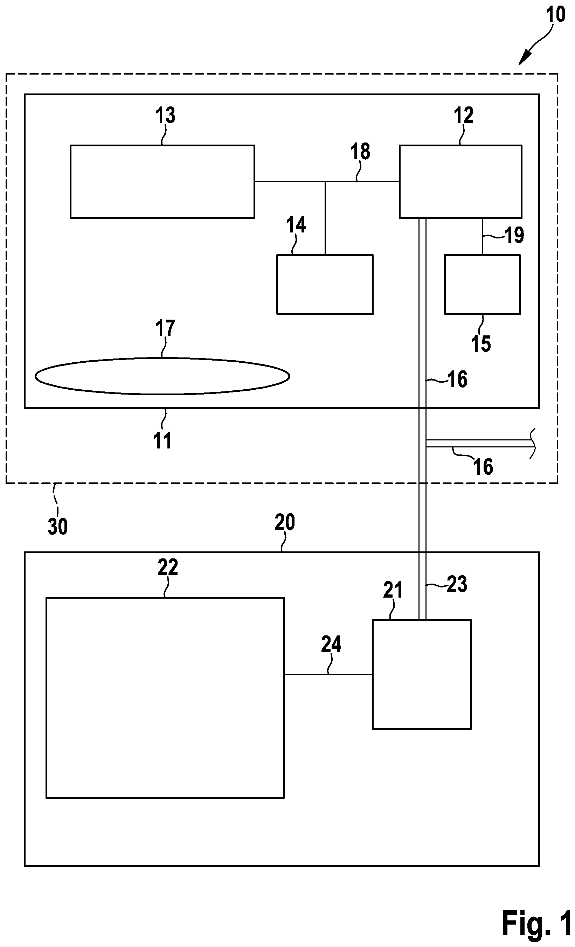

Fig. 1 zeigt eine schematische Darstellung des programmierbaren Kamerasystems umfassed eine Kamera und eine Programmiervorrichtung gemäß einer Ausführungsform der vorliegenden Erfindung.

Eine Kamera 11 weist eine Kamera-Steuereinrichtung 12, einen optischen Sensor 13, einen flüchtigen Datenspeicher 14, einen Flash-Speicher 15 und eine Schnittstelle zu einem Datenbus, hier einem CAN-Bus 16, auf. Die Kamera 11 weist weiterhin eine Optik 17 zur Abbildung eines externen Gegenstandes auf den optischen Sensor 13 auf. Die Kamera-Steuereinrichtung 12, der optische Sensor 13 und der flüchtige Datenspeicher 14 sind durch einen Bilddaten-Bus 18 miteinander verbunden. Die Kamera-Steuereinrichtung 12 und der Flash-Speicher15 sind durch einen Programmdaten-Bus 19 miteinander verbunden.

Die Kamera 11 und der CAN-Bus 16 sind Teil eines angedeuteten Automobils 30.

Die Kamera 11 ist ausgestaltet, Bilddaten mittels dem Sensor 13 zu erfassen, über den Bilddaten-Bus 18 in dem Datenspeicher 14 abzulegen und mit der Kamera-Steuereinrichtung 12 zu verarbeiten. Die Kamera-Steuereinrichtung 12 erhält ihr Steuerprogramm aus dem Flash-Speicher 15 über den Programmdaten-Bus 19.

Zur Vorbereitung des normalen Betriebs lädt die Kamera-Steuereinrichtung 12 Programmdaten aus dem Flash-Speicher 15. Im normalen Betrieb erfasst die Kamera 11 Bilder einer Verkehrssituation, die als Bilddaten im Datenspeicher 14 abgelegt und von der Kamera-Steuereinrichtung 12 ausgewertet werden. Die ausgewertete Verkehrssituation wird in Form einer gegenüber der Bilddatenmenge stark reduzierten Datenmenge über den CAN-Bus 16 an andere Einrichtungen im Automobil 30 übermittelt.

Die Kamera-Steuereinrichtung 12 ist als Teil der Kamera 11 zu verstehen, auch wenn die Kamera-Steuereinrichtung 12 räumlich getrennt von dem Bildsensor 13 angeordnet ist.

Die Kamera-Steuereinrichtung 12 der Kamera 11 kann in einem Programmier-Modus programmiert werden, d.h. in diesem Modus können Programmdaten von extern geladen und in den Flash-Speicher 15 geschrieben werden. Dies erfolgt mittels einer externen Programmiervorrichtung 20.

Die Programmiervorrichtung 20 zur Programmierung der Kamera-Steuereinrichtung 12 weist eine Steuereinheit 21, ein Display 22 und eine Schnittstelle zu einem CAN-Bus 23 auf. Die Steuereinheit 21 und das Display 22 sind über einen Bilddaten-Bus 24 miteinander verbunden. Das Display 22 ist ein hochauflösender Bildschirm.

In Fig. 1 ist das programmierbare Kamerasystem 10 in dem Zustand gezeigt, in dem eine Programmierung der Kamera-Steuereinrichtung 12 erfolgt. Dazu ist einerseits die Optik 17 der Kamera 11 auf das Display 22 der Programmiervorrichtung 20 ausgerichtet und andererseits ist der CAN-Bus 23 mit dem CAN-Bus 16 des Automobils 30 verbunden, z.B. über einen Diagnose-/Wartungsstecker.

Die Programmiervorrichtung 20 ist ausgestaltet, um Programm-Daten für die Kamera 11 mit dem zweidimensionalen 2D-Barcode auf dem Display 22 optisch anzuzeigen. Weiterhin ist die Programmiervorrichtung 20 ausgestaltet, um mit der Kamera-Steuereinrichtung 12 über den CAN-Bus 16 zu kommunizieren.

Diese Kommunikation über den CAN-Bus 16 umfasst das Einleiten des Programmier-Modus der Kamera-Steuereinrichtung 12 durch die Programmiervorrichtung 20 mittels Programmier-Modus-Signalen und die Protokollierung der Übertragung von Programm-Daten für die Kamera 11, also eine Übermittlung einer Quittung über den Empfang der Programm-Daten von der Kamera-Steuereinrichtung 12 an die Programmiervorrichtung 20. Die Programm-Daten werden als 2D-Barcodes auf dem Display 22 dargestellt und optisch an die Kamera 11 übertragen.

Zur Programmierung ist die Kamera 11 bzw. die Kamera-Steuereinrichtung 12 ausgestaltet, über die Optik 17 und den Bildsensor 13 Programm-Daten mit einem Barcode optisch zu empfangen und einzulesen, den Empfang der Programm-Daten über den CAN-Bus zu quittieren, und den Flash-Speicher 15 mit den Programm-Daten zu programmieren.

Die Programmierung der Kamera 11 erfolgt durch Abspielen von veränderlichen 2D-Barcodes auf dem Display 22 der Programmiervorrichtung 20. Die Kamera 11 nimmt in diesem Beispiel 1024x512 Pixel in 4096 Graustufen mit 30 Bildern/s auf. Dadurch kann sie hoch aufgelöste 2D-Codes wie z.B. QR-Codes, Aztec-Codes oder DataMatrix-Codes mit mehreren kB Nutzdaten pro Bild aufnehmen. Eine sichere Übertragung mit Flusskontrolle wird erhalten, indem zur Quittierung als Rückkanal der CAN-Bus benutzt wird.

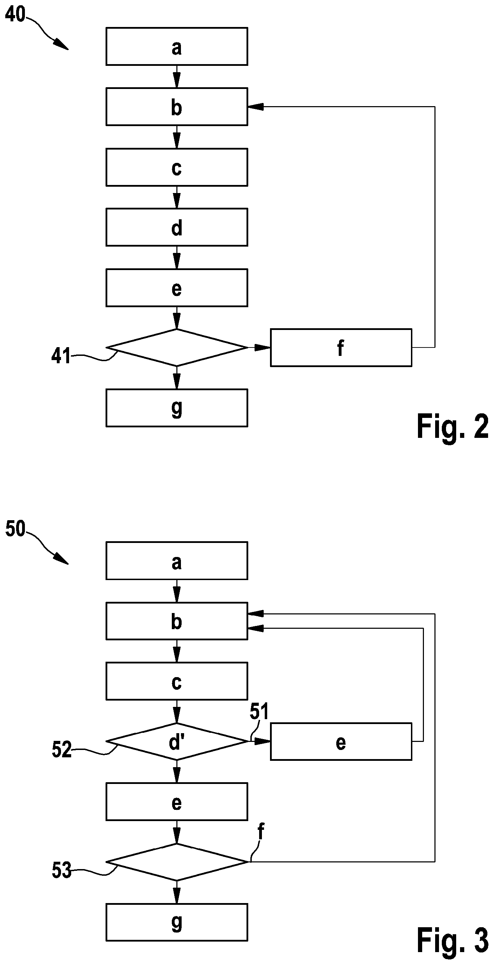

Fig. 2 zeigt ein Flussdiagramm 40 eines allgemeinen Programmierverfahrens gemäß einer weiteren Ausführungsform der vorliegenden Erfindung. Das Verfahren wird beispielhaft mit Bezug auf das programmierbare Kamerasystem 10 aus Fig. 1 erläutert.

Das Verfahren beginnt in Verfahrensschritt a) mit dem Eintreten in einen Programmier-Modus. Die Programmiervorrichtung 20 sendet dazu ein Programmier-Modus-Signal über den CAN-Bus 16 an die Kamera-Steuereinrichtung 12, worauf hin diese in den Programmier-Modus eintritt und optionalerweise eine Quittierung hierzu über den CAN-Bus 16 sendet.

Die Kamera-Steuereinrichtung 12 beginnt nun in Verfahrensschritt b) damit, alle Programm-Daten bildschirmseitenweise auf dem Display 22 in einem 2D Barcode anzuzeigen. Diese auf dem Display 22 angezeigten Daten werden in Verfahrensschritt c) von dem Kamerasensor 13 empfangen und als Empfangs-Daten eingelesen.

In Verfahrensschritt d) werden die Empfangs-Daten auf Korrektheit geprüft. Der Empfang wird Verfahrensschritt e) mit dem Prüfergebnis über den CAN-Datenbus 16 quittiert.

Nun erfolgt eine Verzweigung 41 abhängig vom Prüfungsergebnis. Im Falle nicht korrekter oder nicht vollständiger Programm-Daten werden in Zweig f) die nicht korrekten Daten erneut oder die fehlenden Daten erstmals mittels der Verfahrensschritte b) bis e) übermittelt und geprüft. Falls die Empfangs-Daten korrekt und vollständig sind, also die Empfangsdaten identisch mit den gesendeten Programm-Daten sind, wird mit Verfahrensschritt g) fort gefahren, und die Kamera-Steuereinrichtung 12 wird mit den Empfangs-Daten programmiert.

Nachdem das Verfahren nun allgemein vorgestellt worden ist, werden nun zwei spezielle Übertragungsschemen näher erläutert.

Fig. 3 zeigt ein Flussdiagramm 50 eines Programmierverfahrens gemäß einer weiteren Ausführungsform der vorliegenden Erfindung mit einem ersten Übertragungsschema.

In dem ersten Übertragungsschema wird für jedes Bild bzw. jede Seite nach dem Anzeigen auf dem Display 22 in Schritt b) und dem Empfangen in Schritt c) eine Prüfung auf Korrektheit in d') vorgenommen. Der Verfahrensschritt d) aus Fig. 2 ist hier als Verfahrensschritt d') mit Verzweigung dargestellt.

Im Fall eines nicht korrekt empfangenen Bildes wird nach Zweig 51 verzweigt und das Prüfergebnis in e) an die Kamera-Steuereinrichtung 12 übermittelt. Auf das nicht korrekte Prüfergebnis hin veranlasst die Kamera-Steuereinrichtung 12 die erneute Anzeige des nicht korrekt empfangenen Bildes.

Im Fall eines korrekt empfangenen Bildes wird nach Zweig 52 verzweigt und das Prüfergebnis in e) an die Kamera-Steuereinrichtung 12 übermittelt. Nun werden die korrekt empfangenen Programm-Daten in Abfrage 53 auf Vollständigkeit überprüft. Im Falle noch fehlender Daten wird in Zweig f) verzweigt und die Kamera-Steuereinrichtung 12 veranlasst die Anzeige eines neuen Bildes mit Fortsetzung des Verfahrens in Verfahrensschritt b).

Falls die Programm-Daten in Abfrage 53 vollständig sind erfolgt in Verfahrensschritt g) ein Beschreiben des Flash-Speichers 15 mit den vollständigen korrekt empfangenen Programmdaten.

Gemäß einer abgewandelten Ausführungsform dazu werden die Programm-Daten sektorenweise übertragen und programmiert. Im Fehlerfall wird der gesamte fehlerhafte Sektor überschrieben. In dieser Ausführungsform wäre ein Flussdiagramm ähnlich dem Flussdiagramm 50, jedoch fände Verfahrensschritt g) zwischen den Verfahrensschritten e) und f) statt.

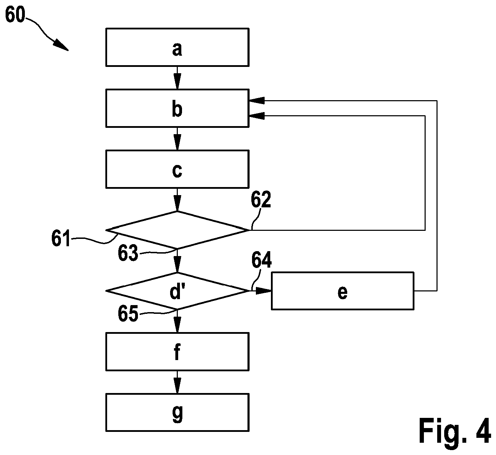

Fig. 4 zeigt ein Flussdiagramm 60 eines Programmierverfahrens gemäß einer weiteren Ausführungsform der vorliegenden Erfindung mit einem zweiten Übertragungsschema.

In dem zweiten Übertragungsschema wartet die Programmiervorrichtung 20 nicht auf die Bestätigung eines einzelnen übertragenen Bildes, sondern empfängt asynchron eine Liste mit Datenblöcken, die erneut übertragen werden müssen.

Dazu wird nach dem Anzeigen eines Bildes auf dem Display 22 in Schritt b) und dem Empfangen in Schritt c) eine Prüfung auf Vollständigkeit der Programmdaten in 61 vorgenommen. In diesem Beispiel werden bei Unvollständigkeit zunächst die fehlenden Daten gesendet durch Verzweigung in Zweig 62 und Wiederholung der Verfahrensschritte Schritt b) und Schritt c). Anschließend wird in Zweig 63 verzweigt und in Schritt d') die Korrektheit der Daten überprüft. Der Verfahrensschritt d) aus Fig. 2 ist hier als Verfahrensschritt d') mit Verzweigung dargestellt.

Im Fall nicht korrekt empfangener Daten wird nach Zweig 64 verzweigt und das Prüfergebnis in e) zusammen mit der Identifizierung von nicht korrekten Datenblöcken an die Kamera-Steuereinrichtung 12 übermittelt. Die nicht korrekten Datenblöcke werden erneut übermittelt durch Fortsetzung des Verfahrens in Schritt b). Sind alle Daten korrekt angekommen, so wird nach Zweig 65 verzweigt und die Korrektheit in Verfahrensschritt e) quittiert. Schließlich wird in Verfahrensschritt g) der Flash-Speichers 15 mit den vollständigen korrekt empfangenen Programmdaten beschrieben Die Programmierung der Kamera-Steuereinrichtung 12 bzw. der Kamera 11 ist damit abgeschlossen.

Gemäß einer abgewandelten Ausführungsform dazu werden die Programm-Daten sektorenweise übertragen und programmiert. Im Fehlerfall wird der gesamte fehlerhafte Sektor überschrieben. In dieser Ausführungsform wäre ein Flussdiagramm ähnlich dem Flussdiagramm 60, jedoch fände Verfahrensschritt g) zwischen den Verfahrensschritten d') und f) statt.

In einer weiteren alternativen Ausführungsform werden nicht nur Schwarz-Weiß Codes verwendet, sondern durch Verwendung von Graustufen oder Farbwerten mehrere Bits pro Pixel übertragen. Dadurch erhöht sich die Anzahl der pro Bild übertragbaren Daten.

In noch einer weiteren Ausführungsform wird zu Beginn der Übertragung eine Bestimmung der optimalen Parameter durchgeführt, also die Auflösung und gegebenenfalls die Anzahl der Graustufen oder Farbwerte dynamisch an die Gegebenheiten wie Licht, Abstand zur Kamera, ... angepasst. Dazu werden auf dem optischen Pfad Testmuster gesendet und mittels Protokolldaten wird auf dem Datenbus ein Datenkanal ausgehandelt. Dadurch lässt sich die unter den gegebenen Bedingungen optimale Kanalkapazität bzw. ein optimierter Datenkanal erreichen. Zur Erhöhung der Robustheit werden die bekannten zahlreichen Verfahren der Kanalcodierung zur Erzeugung von Redundanz eingesetzt; der QR-Code definiert z.B. Fehlerkorrekturraten zwischen 7% und 30%.

## Patentansprüche

1. Programmierbare Kamera (11) für ein Automobil mit einer Kamera-Steuereinrichtung (12), einem optischen Sensor (13), einem flüchtigen Datenspeicher (14) und einem Flash-Speicher (15), wobei die Kamera (11) ausgestaltet ist, in einem Programmier-Modus Programm-Daten mit einem zweidimensionalen Barcode optisch zu empfangen und einzulesen und den Flash-Speicher (15) mit den empfangenen Programm-Daten zu programmieren, wobei die Kamera (11) eine Schnittstelle zu einem CAN-Bus (16) eines Automobils (30) aufweist und ausgestaltet ist, über den CAN-Bus (16) ein Programmier-Modus Signal zu empfangen, um den Programmier-Modus einzunehmen, und über den CAN-Bus (16) im Programmier-Modus den Empfang der Programm-Daten zu quittieren.

2. Programmiervorrichtung zur Programmierung einer programmierbaren Kamera (11) eines Automobils mit einer Steuereinheit (21), einem Display (22) und einer Schnittstelle zu einem CAN-Bus (23) eines Automobils (30), wobei die Programmiervorrichtung (20) ausgestaltet ist, Programm-Daten für die programmierbare Kamera (11) mittels einem zweidimensionalen Barcode optisch auf dem Display (22) anzuzeigen, wobei die Programmiervorrichtung (12) ausgestaltet ist, über den CAN-Bus (16) ein Programmier-Modus Signal zu senden, um die Kamera (11) in einen Programmier-Modus zu versetzen, wobei die Programmiervorrichtung (20) ausgestaltet ist, über den CAN-Bus (16) eine Quittung über den Empfang der Programm-Daten zu erhalten.

3. Programmierbares Kamerasystem (10) mit einer programmierbaren Kamera (11) nach Anspruch 1 und einer Programmiervorrichtung (20) nach Anspruch 2, wobei die Kamera (11) und die Programmiervorrichtung (20) über einen gemeinsamen CAN-Bus (16, 23) verbunden sind.

4. Programmierbares Kamerasystem nach Anspruch 3, **dadurch gekennzeichnet, dass** die Kamera (11) und die Programmiervorrichtung (20) ausgestaltet sind, um über den gemeinsamen CAN-Bus (16, 23) mittels gesendeten und übertragenen Testmustern einen zur Programmierung zu verwendenden Datenkanal zu optimieren.

5. Verfahren zur Programmierung einer programmierbaren Kamera (11) für ein Automobil nach Anspruch 1 mit einer Programmiervorrichtung (20) nach Anspruch 2 mit den Verfahrensschritten
b) Anzeige von Programm-Daten auf dem Display (22) der Programmiervorrichtung (20) mittels einem zweidimensionalen Barcode;
c) Optisches Empfangen und Einlesen der Programm-Daten mittels des Kamerasensors (13) der Kamera (11);
d) Prüfen der empfangenen Programm-Daten auf Korrektheit;
g) Programmieren der Kamera-Steuereinrichtung (12) mit den Empfangs-Daten,
wobei die folgenden Verfahrensschritte durchgeführt werden
a.1) Aussenden eines Programmier-Modus-Signals mittels der Programmiervorrichtung über einen CAN-Bus (16, 23) eines Automobils (30);
a.2) Versetzen der programmierbaren Kamera (11) in den Programmier-Modus mittels des Programmier-Modus-Signals über den CAN-Bus (16, 23);
e) Quittieren der Programm-Daten über den CAN-Bus (16, 23); falls die empfangenen Programm-Daten nicht korrekt oder nicht vollständig sind
f) Wiederholung der Schritte b) bis e); falls die empfangenen Programm-Daten korrekt und vollständig sind

6. Verfahren nach Anspruch 5, **dadurch gekennzeichnet, dass** die Anzeige der Programm-Daten als zweidimensionaler Barcode mit Grauwerten erfolgt.

7. Verfahren nach Anspruch 5, **dadurch gekennzeichnet, dass** die Anzeige der Programm-Daten als zweidimensionaler Barcode mit Farbwerten erfolgt.

8. Verfahren nach einem der Ansprüche 5 bis 7, **dadurch gekennzeichnet, dass** vor dem Versetzen in den Programmier-Modus weiterhin ein Optimieren eines optischen Übertragungskanals durchgeführt wird, wobei die Auflösung der Anzeige von Programm-Daten auf dem Display (22) der Programmiervorrichtung (20);und die Anzahl der Graustufen oder Farbwerte in Abhängigkeit des Lichts und/ oder des Abstands zur Kamera angepasst werden.

## Claims

1. Programmable camera (11) for an automobile, having a camera control device (12), an optical sensor (13), a volatile data memory (14) and a flash memory (15), wherein the camera (11) is configured, in a programming mode, to optically receive and read in program data containing a two-dimensional barcode and to program the flash memory (15) using the received program data, wherein the camera (11) has an interface to a CAN bus (16) of an automobile (30) and is configured to receive a programming mode signal via the CAN bus (16) in order to adopt the programming mode and to acknowledge the reception of the program data in the programming mode via the CAN bus (16).

2. Programming apparatus for programming a programmable camera (11) of an automobile, having a control unit (21), a display (22) and an interface to a CAN bus (23) of an automobile (30), wherein the programming apparatus (20) is configured to optically display program data for the programmable camera (11) on the display (22) using a two-dimensional barcode, wherein the programming apparatus (12) is configured to send a programming mode signal via the CAN bus (16) in order to change the camera (11) to a programming mode, wherein the programming apparatus (20) is configured to receive an acknowledgement of the reception of the program data via the CAN bus (16).

3. Programmable camera system (10) having a programmable camera (11) according to Claim 1 and a programming apparatus (20) according to Claim 2, wherein the camera (11) and the programming apparatus (20) are connected via a common CAN bus (16, 23).

4. Programmable camera system according to Claim 3, **characterized in that** the camera (11) and the programming apparatus (20) are configured to optimize a data channel to be used for programming by means of sent and transmitted test patterns via the common CAN bus (16, 23) .

5. Method for programming a programmable camera (11) for an automobile according to Claim 1 using a programming apparatus (20) according to Claim 2, having the method steps of
b) displaying program data on the display (22) of the programming apparatus (20) by means of a two-dimensional barcode;
c) optically receiving and reading in the program data by means of the camera sensor (13) of the camera (11) ;
d) checking the received program data for correctness;
g) programming the camera control device (12) using the received data,
wherein the following method steps are carried out
a.1) emitting a programming mode signal by means of the programming apparatus via a CAN bus (16, 23) of an automobile (30);
a.2) changing the programmable camera (11) to the programming mode by means of the programming mode signal via the CAN bus (16, 23);
e) acknowledging the program data via the CAN bus (16, 23) if the received program data are incorrect or incomplete;
f) repeating steps b) to e)
if the received program data are correct and complete.

6. Method according to Claim 5, **characterized in that** the program data are displayed as a two-dimensional barcode with grey values.

7. Method according to Claim 5, **characterized in that** the program data are displayed as a two-dimensional barcode with colour values.

8. Method according to one of Claims 5 to 7, **characterized in that**, before changing to the programming mode, an optical transmission channel is also optimized, wherein the resolution of the display of program data on the display (22) of the programming apparatus (20) and the number of grey scales or colour values are adapted on the basis of the light and/or the distance to the camera.

## Revendications

1. Caméra programmable (11) destinée à une automobile, comprenant un dispositif de commande de caméra (12), un capteur optique (13), une mémoire de données volatile (14) et une mémoire flash (15), dans lequel la caméra (11) est conçue, dans un mode de programmation, pour recevoir et lire optiquement des données de programme comportant un code à barres bidimensionnel et pour programmer la mémoire flash (15) avec les données de programme reçues, dans lequel la caméra (11) comporte une interface avec un bus CAN (16) d'une automobile (30) et est conçue pour recevoir un signal de mode de programmation par l'intermédiaire du bus CAN (16) afin de passer dans le mode de programmation et, dans le mode de programmation, pour accuser réception des données de programme par l'intermédiaire du bus CAN (16).

2. Dispositif de programmation destiné à programmer une caméra programmable (11) d'une automobile, comportant une unité de commande (21), un afficheur (22) et une interface avec un bus CAN (23) d'une automobile (30), dans lequel le dispositif de programmation (20) est conçu pour afficher optiquement sur l'afficheur (22), au moyen d'un code à barres bidimensionnel, des données de programme destinées à la caméra programmable (11), dans lequel le dispositif de programmation (12) est conçu pour émettre un signal de mode de programmation par l'intermédiaire du bus CAN (16) afin de faire passer la caméra (11) dans un mode de programmation, dans lequel le dispositif de programmation (20) est conçu pour recevoir par l'intermédiaire du bus CAN (16) un accusé de réception des données de programme.

3. Système de caméra programmable (10) comprenant une caméra programmable (11) selon la revendication 1 et un dispositif de programmation (20) selon la revendication 2, dans lequel la caméra (11) et le dispositif de programmation (20) sont reliés par l'intermédiaire d'un bus CAN commun (16, 23).

4. Système de caméra programmable selon la revendication 3, **caractérisé en ce que** la caméra (11) et le dispositif de programmation (20) sont conçus pour optimiser un canal de données devant être utilisé pour la programmation par l'intermédiaire du bus CAN commun (16, 23) au moyen de motifs de test émis et transférés.

5. Procédé de programmation d'une caméra programmable (11) destinée à une automobile selon la revendication 1, dotée d'un dispositif de programmation (20) selon la revendication 2, comprenant les étapes de procédé consistant à :
b) afficher des données de programme sur l'afficheur (22) du dispositif de programmation (20) au moyen d'un code à barres bidimensionnel ;
c) recevoir et lire optiquement les données de programme au moyen du capteur de caméra (13) de la caméra (11) ;
d) vérifier si les données de programme reçues sont correctes ;
g) programmer le dispositif de commande de caméra (12) avec les données reçues,
dans lequel les étapes de procédé suivantes sont exécutées
a.1) envoyer un signal de mode de programmation au moyen du dispositif de programmation par l'intermédiaire d'un bus CAN (16, 23) d'une automobile (30) ;
a.2) faire passer la caméra programmable (11) dans le mode de programmation au moyen du signal de mode de programmation par l'intermédiaire du bus CAN (16, 23) ;
e) accuser réception des données de programme par l'intermédiaire du bus CAN (16, 23) ;
dans le cas où les données de programme reçues ne sont pas correctes ou complètes,
f) répéter les étapes b) à e) ;
dans le cas où les données de programme reçues sont correctes et complètes.

6. Procédé selon la revendication 5, **caractérisé en ce que** l'affichage des données de programme est effectué sous la forme d'un code à barres bidimensionnel présentant des valeurs de gris.

7. Procédé selon la revendication 5, **caractérisé en ce que** l'affichage des données de programme est effectué sous la forme d'un code à barres bidimensionnel présentant des valeurs de couleur.

8. Procédé selon l'une des revendications 5 à 7, **caractérisé en ce qu'**une optimisation d'un canal de transmission optique est en outre effectuée avant le passage dans le mode de programmation, dans lequel la résolution de l'affichage des données de programme sur l'afficheur (22) du dispositif de programmation (20) ; et le nombre de valeurs de gris ou de valeurs de couleur peuvent être ajustés en fonction de la lumière et/ou de la distance de la caméra.
